# EUROPEAN PATENT APPLICATION

(11) **EP 4 227 590 A1**
(43) Date of publication of application: **16.08.2023**
(21) Application number: 20956625.6
(22) Date of filing: 05.10.2020
(51) Int. Cl.: F24F 8/15, F24F 8/108, F24F 8/10, F24F 11/00, F24F 11/46, F24F 11/39, F24F 11/50, F24F 11/56, F24F 11/64, F24F 11/74, F24F 110/50

(54) **AIR PURIFIER**

(71) Applicant: Masam Purificadores, S.L., 08208 Sabadell (ES)
(72) Inventor: VIDAL SAEZ GARCIA, Antonio, 08208 Sabadell (ES); GARCIA RUIZ, Antonia, 08208 Sabadell (ES); UMBERT MARTINEZ, Miquel, 08208 Sabadell (ES)
(74) Representative: Ponti & Partners, S.L.P
(86) International application number: PCT/ES2020/070600
(87) International publication number: WO 2022/074263

(57) **Abstract**

Air purifier (1) comprising an air channel (10) extending from an inlet (11) to an outlet (12), a fan (13) configured to generate an air flow from the inlet (11) to the outlet (12) through the channel (10), purification means (14) arranged inside the channel (10) and configured to purify the air flow, main sensing means (15) configured to measure the quality of the air flow at a point of the channel (10) and a control circuit (16) in connection with the fan (13) and the main sensing means (15), where the control circuit (16) has a program configured to compare the parameters provided by the main sensing means (15) with preset target parameters and, from said comparison, adapt the air flow generated by the fan (13).

## Description

### Field of the invention

The invention has as its scope air purifiers, which eliminate particles and molecules harmful to health that circulate in the environment. In particular, the invention consists of an air purifier configuration with higher energy efficiency and higher filtration efficiency.

### Background of the invention

Reports published by the same European Environment Agency reveal that, based on the measurements made, people living in European cities are exposed to levels of air pollution that the World Health Organisation considers harmful. Fine particles (PM2.5) are the most harmful pollutant. It is estimated that each year they are responsible for the premature death of some 400,000 Europeans.

And this is not the only negative consequence of the poor quality of the air we breathe. In economic terms, poor air quality has a very negative impact on workers' productivity and increases medical expenses.

Thanks to legislation, technological advances and the progressive abandonment of highly polluting fossil fuels, air quality has improved in Europe in recent decades. However, indoor air quality also requires attention as we increasingly spend more time inside buildings and new buildings are increasingly airtight.

Air purifiers are known in the state of the art which generate an air flow with a fan and have particle and molecule filtration systems, both mechanically and by adsorption, activated carbon being the material commonly used as an air filter. However, these purifiers do not have means to make energy consumption efficient, nor to inform the consumer of the efficiency achieved in the filtration or the improvement in air quality, understood as improvement of air quality to the adaptation of the composition and concentration of the multiple gases and particles that are dispersed in an environment.

There are other alternatives, where the filtration of particles and molecules together are carried out by photocatalysis or by cold plasma, but with the consequent contribution of energy necessary for the emission of radiation, which can be dangerous, in addition to expensive to implement.

It is, therefore, suitable to offer an alternative purifier that resolves the aforementioned contradictions.

### Description of the invention

The purpose of the present invention is to provide an air purifier capable of containing or deactivating by a single device and efficiently the particles and molecules harmful to health, and in particular, those considered most harmful to people, such as viruses, bacteria, PM2.5, PM10, carbon monoxide (CO), carbon dioxide (CO2), tropospheric ozone (O3), nitrogen dioxide (NO2) and/or sulphur dioxide (SO2).

The air purifier object of the invention is of the type comprising:
- an air channel extending from an inlet to an outlet,
- a fan, configured to generate an air flow from the inlet to the outlet through the channel,
- purification means, arranged inside the channel and configured to purify the air flow,
- main sensing means, configured to measure the quality of the air flow at a point of the channel, and
- a control circuit, in connection with the fan and the main sensing means.

The present air purifier is characterised in that the control circuit is configured to adapt at each instant the air flow generated by the fan, according to the air quality measured by the main sensing means.

The control circuit has programming with preset target parameters, whereby it compares the parameters provided by the main sensing means. From this comparison, it decides the mass flow to be generated by the fan at each moment, thus achieving greater efficiency in the purification process.

In a preferred embodiment, the air purifier also comprises secondary sensing means, connected to the control circuit, which are located at one end of the channel, while the primary sensing means are located at the other end of the channel. In this case, the control circuit is configured to adapt at each moment the air flow generated by the fan according to the air quality measured by both groups of sensing means. The control circuit compares the measurements of the particle and molecule content in the air outlet with respect to the measurements of the particle and molecule content in the air inlet, and adjusts the speed of the fan in order to meet the efficiency objectives of the processes carried out by the purification means, while optimising the energy expenditure of the fan.

Optionally, a possible embodiment of the purifier comprises communication means connected to the control circuit, the control circuit and the communication means being configured to inform the user about one or more operating parameters of the air purifier. Said operating parameters may consist, for example, of the quality of the inlet air, the quality of the outlet air, the difference in the quality of the air between the inlet and the outlet or the target, the operation of the purification means, the appropriate moment to replace the purification means, the harmful particles detected by at least one of the sensing means, the harmful particles filtered by the purification means and/or the amount of filtered air flow. Preferably, the communication means comprise a portable device wirelessly connected to the control circuit, such as a smartphone, which receives the operating parameters and displays them to the user.

In a preferred embodiment, the channel is configured to be positioned vertically in its condition of use, the inlet being located at the base of the air purifier and being axially symmetrical. In this way, the purified air is distributed more homogeneously in the enclosure.

In an even more preferred embodiment, the purification means comprise two or more mechanical filtration blocks placed in series, each mechanical purification block being suitable for purification of a different type of particles. In this case, the particle filtration is carried out in filter blocks of higher filtration micrage to lower filtration micrage. Additionally, the purification means may comprise at least one adsorption filtration block.

The adsorption filtration block comprises clay granules, preferably with different compositions or primers, so that each type of clay granule absorbs a particular molecular element.

In a preferred embodiment, the adsorption filtration block is composed of a bed of zeolite granules. Zeolites are microporous aluminosilicate minerals that come from sedimentary, volcanic, and metamorphic rocks. They have high adsorption capacity by chemisorption and high selectivity. In a possible embodiment, the bed comprises at least two types of granules; one type of granule composed of virgin anthracite activated carbon, preferably with a percentage by weight greater than 70%, and another type of granule composed of potassium permanganate, preferably with a percentage by weight greater than 12%. The virgin anthracite activated carbon granule is very effective in the treatment of harmful air compounds with high molecular weight (adsorption process) and the potassium permanganate granule is very effective in the treatment of harmful air compounds with low molecular weight (chemisorption process). The destruction of viruses and bacteria occurs by a contact oxidation process, produced by potassium permanganate. The effectiveness of the bed depends on the mixture of both granules, as both granules complement each other when treating the various contaminants. In turn, it depends on the contact time of the air with the mixed granules, which must be greater than 0.3 seconds, preferably at least 0.6 seconds. Therefore, the fan and the control circuit are preferably configured to generate an air flow that takes between 0.3 and 1.3 seconds to cross each adsorption filtration block, preferably between 0.6 seconds and 1 second.

As an option, at least one adsorption filtration block is intercalated between two of the mechanical filtration blocks, so that particle filtration and molecular filtration are carried out sequentially and in series (mechanical filtration, molecular filtration and again mechanical filtration) .

In addition, said sensing means may be configured to sense different types of particles, while the control circuit may be configured to analyse, from the sensed particles, if any of the corresponding filtration blocks is not working correctly.

Other possible sensors comprised by the sensing means, in addition to those already mentioned, may consist of sensors of PM1, PM4, VOC, NO, formaldehyde, air temperature and/or relative humidity of the air.

The above and other advantages and characteristics will be more fully understood from the following detailed description of an example of embodiment with reference to the attached drawing, which are provided for illustrative and non-limiting purposes.:

### Brief description of the figure

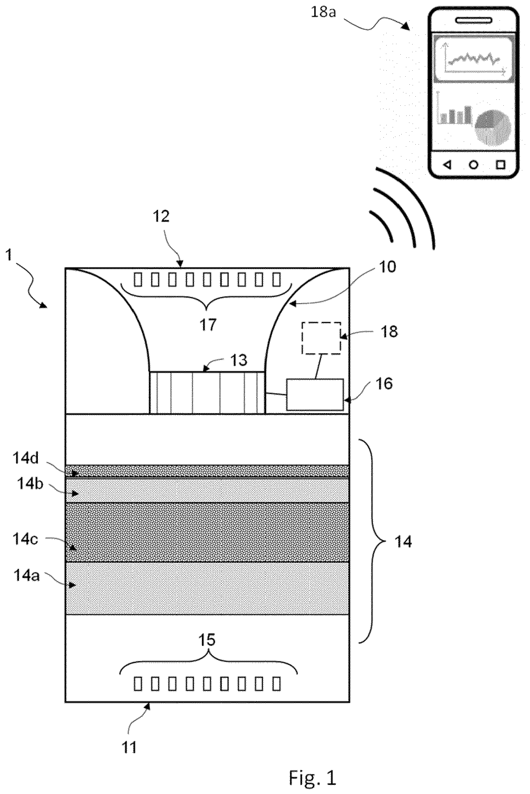

Figure 1 is a schematic illustration of a preferred embodiment of the present air purifier.

### Description of a preferred embodiment

A preferred embodiment of the air purifier is described below, in view of Figure 1.

As can be seen in said figure, the present embodiment of the air purifier (1) comprises:
- an axially symmetrical air channel (10) extending inside a housing from an inlet (11) to an outlet (12), the inlet (11) being located at the base of the air purifier (1),
- a fan (13) configured to generate an air flow from the inlet (11) to the outlet (12) through the channel (10),
- purification means (14) arranged inside the channel (10) and configured to purify the air flow, which include two mechanical filtration blocks (14a, 14b) placed in series and two adsorption filtration blocks (14c, 14d), intercalated between said mechanical filtration blocks (14a, 14b),
- main sensing means (15) arranged at the inlet and secondary sensing means (17) arranged at the outlet, configured to measure the quality of the air flow at the corresponding points of the channel (10),
- a control circuit (16) in connection with the fan (13) and the main (15) and secondary (17) sensing means, and
- communication means (18) in wireless communication with a portable device (18a), which are connected to the control circuit (16) and configured to inform the user about various operating parameters of the air purifier (1).

Although not shown in Figure 1, the present preferred embodiment is characterised in that:
- the control circuit (16) has a programming configured to compare the parameters provided by the main sensing means (15) with preset target parameters and, from said comparison, adapt the air flow generated by the fan (13),
- each mechanical purification block (14a, 14b) is suitable for purification of a different type of particles,
- the adsorption filtration blocks (14c, 14d) include a bed of zeolite granules, each of a different composition,
- the fan (13) and the control circuit (15) are configured to generate an air flow that takes at least 0.6 seconds to cross each adsorption filtration block (14c, 14d), and in that
- said sensing means (15, 17) are configured to sense various types of particles, while the control circuit (16) is configured to analyse, from the sensed particles, whether any of the corresponding filtration blocks (14a, 14b, 14c, 14d) is not functioning correctly.

Although reference has been made to a specific embodiment of the invention, it is evident to a person skilled in the art that the air purifier described is susceptible to numerous variations and modifications, and that all the aforementioned details can be replaced by other technically equivalent ones, without departing from the scope of protection defined by the following claims.

## Claims

1. Air purifier (1) comprising:
- an air channel (10) extending from an inlet (11) to an outlet (12),
- a fan (13) configured to generate an air flow from the inlet (11) to the outlet (12) through the channel (10),
- purification means (14) arranged inside the channel (10) and configured to purify the air flow,
- main sensing means (15) configured to measure the quality of the air flow at a point of the channel (10), and
- a control circuit (16) in connection with the fan (13) and the main sensing means (15), the air purifier (1) being **characterised in that** the control circuit (16) has a programming configured to compare the parameters provided by the main sensing means (15) with preset target parameters and, from said comparison, adapt the air flow generated by the fan (13).

2. Air purifier (1) according to claim 1, **characterised in that** it comprises secondary sensing means (17) connected to the control circuit (16), the main sensing means (15) being located at one end of the channel (10) and the secondary sensing means (17) located at the other end of the channel (10), the control circuit (16) being configured to adapt at each moment the air flow generated by the fan (13) according to the air quality measured by said sensing means (15, 17).

3. Air purifier (1) according to claim 1 or 2, **characterised in that** it comprises communication means (18) connected to the control circuit (16), the control circuit (16) and the communication means (18) being configured to inform the user about one or more operating parameters of the air purifier (1).

4. Air purifier (1) according to claim 3, **characterised in that** the communication means (18) comprise a portable device (18a) wirelessly connected to the control circuit (16).

5. Air purifier (1) according to any of the preceding claims, **characterised in that** the channel (10) is configured to be vertically positioned in its condition of use, the inlet (11) being located at the base of the air purifier (1) and being axially symmetrical.

6. Air purifier (1) according to any of the preceding claims, **characterised in that** the purification means (14) comprise two or more mechanical filtration blocks (14a, 14b) placed in series, each mechanical purification block (14a, 14b) being suitable for the purification of a different type of particles.

7. Air purifier (1) according to any of the preceding claims, **characterised in that** the purification means (14) comprise at least one adsorption filtration block (14c, 14d).

8. Air purifier (1) according to claim 7, **characterised in that** at least one adsorption filtration block (14c, 14d) includes a bed of zeolite granules.

9. Air purifier (1) according to claim 7 or 8, **characterised in that** at least one adsorption filtration block (14c, 14d) is intercalated between two mechanical filtration blocks (14a, 14b).

10. Air purifier (1) according to any of claims 7 to 9, **characterised in that** the fan (13) and the control circuit (15) are configured to generate an air flow that takes at least 0.3 seconds to cross each adsorption filtration block (14c, 14d).

11. Air purifier (1) according to claim 10, wherein the fan (13) and the control circuit (15) are configured to generate an air flow that takes between 0.6 seconds and 1 second to cross each adsorption filtration block (14c, 14d).

12. Air purifier (1) according to any of claims 6 to 10, **characterised in that** said sensing means (15, 17) are configured to sense several types of particles, while the control circuit (16) is configured to analyse, from the sensed particles, whether any of the corresponding filtration blocks (14a, 14b, 14c, 14d) is not functioning correctly.
